Europäisches Patentamt

European Patent Office

Office européen des brevets

(19)

(11) Numéro de publication : **0 153 259**
**B1**

(12) ## FASCICULE DE BREVET EUROPÉEN

(45) Date de publication du fascicule du brevet :
11.10.89

(21) Numéro de dépôt : 85420023.5

(22) Date de dépôt : 11.02.85

(51) Int. Cl.⁴ : **G 01 K   3/00**, G 01 K   5/48,
G 01 K 11/06

(54) Mécanisme indicateur polyvalent pour le contrôle de températures.

(30) Priorité : 14.02.84 FR 8402905

(43) Date de publication de la demande :
28.08.85 Bulletin 85/35

(45) Mention de la délivrance du brevet :
11.10.89 Bulletin 89/41

(84) Etats contractants désignés :
AT BE CH DE GB IT LI LU NL SE

(56) Documents cités :
EP--A-- 0 098 646
FR--A-- 1 515 914
US--A-- 3 483 752
US--A-- 3 664 582

(73) Titulaire : **Société Civile "G.I.R."**
**23-25 rue Edmond Rostand**
**F-13006 Marseille (FR)**

(72) Inventeur : **Jehanno, Jean-Vincent**
**34 Bd. de la Croix-Rousse**
**Lyon (1er) (Rhône) (FR)**

(74) Mandataire : **Maureau, Philippe et al**
**Cabinet Germain & Maureau Le Britannia - Tour C 20,**
**bld Eugène Déruelle**
**F-69003 Lyon (FR)**

Jouve, 18, rue St-Denis, 75001 Paris, France

**Description**

La présente invention a pour objet un procédé polyvalent pour le contrôle de températures. Il s'applique à tout objet, tout produit, toute machine, dont la qualité ou la fiabilité dépendent essentiellement du respect de températures données.

Ce contrôle doit lui-même répondre à des critères de fiabilité et de rentabilité ; il doit être effectué en continu pour tout ou partie de la chaîne fabrication-stockage-distribution-vente d'un produit, ou encore tout au long du fonctionnement d'une machine.

La présente invention propose une solution originale par sa conception même ; c'est un procédé mécanique dont les fonctions sont multiples et qui répond au problème suivant : être capable d'enregistrer les variations de températures durant la vie d'un produit ou le fonctionnement d'une machine.

Ainsi se présentent divers cas de figures, résolus par notre invention, dont nous donnerons tout de suite quelques exemples :

— Le produit est fabriqué (traité ou prélevé) à une température de fabrication ($T_f$) supérieure à sa température de conservation ($T_c$), puis utilisé à une température d'utilisation ($T_u$). Cf. Figure (1).

La figure (1) résume les trois cas alors possibles :

— Soit le produit est conservé à une température ($T_{c1}$) qui ne doit pas dépasser une température seuil ($T_{s1}$) avant d'être utilisé à une température d'utilisation ($T_{u1}$). Nous avons la relation :

$$T_f > T_{u1} > T_{s1} > T_{c1}$$

Ce peut être, par exemple, le cas d'un produit issu du sang, le plasma : le plasma est prélevé à + 37 °C, il doit être conservé à une température inférieure à — 30 °C puis utilisé à température ambiante + 20 °C environ.

— Soit le produit est conservé à une température ($T_{c2}$), il ne doit alors pas descendre au-dessous d'une température seuil ($T_{s2}$), avant d'être utilisé à une température ($T_{u2}$). Nous avons la relation :

$$T_f > T_{u2} > T_{c2} > T_{s2}$$

— Soit le produit est conservé à une température ($T_{c3}$) qui se situe entre un seuil inférieur ($T_{s3}$) et un seuil supérieur ($T_{s4}$) avant d'être utilisé à une température ($T_{u3}$). Nous avons la relation :

$$T_f > T_{u3} > T_{s4} > T_{c3} > T_{s3}$$

Ce peut être, par exemple, le cas du sang. Le sang est prélevé à + 37 °C, il doit être conservé entre + 2 °C et + 6 °C (température de conservation moyenne + 4 °C) puis utilisé à température ambiante, environ + 22 °C.

Autre exemple, le produit est fabriqué (traité ou prélevé) à une température de fabrication ($T_f$) inférieure à sa température de conservation ($T_c$), elle-même inférieure à la température d'utilisation ($T_u$).

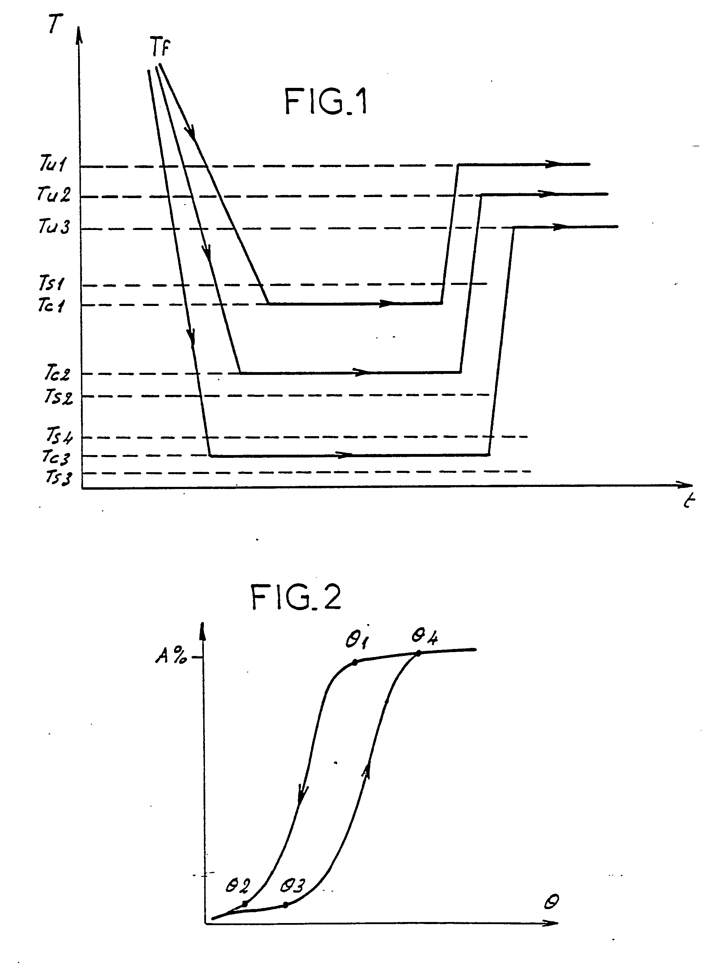

Nous retrouvons là les trois possibilités décrites par la figure 1 mais avec une inversion quant à la température de fabrication.

Le traitement de produits surgelés est un exemple type de la relation $T_u > T_s > T_c > T_f$. Ils doivent en effet être fabriqués à des températures basses de l'ordre de — 35 °C, puis conservés à des températures inférieures à — 15 °C puis remontés en température pour être utilisés.

Nous avons là donné quelques exemples concernant des produits, il va sans dire que ces évolutions en température concernent également des machines ou la protection de composants électroniques (ou autres).

En effet, la présente invention s'applique à des domaines variés tels que :

La Santé (produits pharmaceutiques, produits sanguins injectables, organes destinés aux transplantations). Les produits sanguins injectables deviennent de plus en plus des produits rares et coûteux et il est impossible à l'heure actuelle, de contrôler en continu, par un témoin, dans la « chaîne du sang », le maintien en température (4 °C ± 2 °C, Journal Officiel du 15 septembre 1983).

Ainsi la qualité du produit n'est pas assurée par un témoin unique tout au long de la « chaîne du sang », celle-ci n'est donc pas complète et l'on assiste au non-emploi de produits sanguins (et donc à leur destruction). Il en résulte une perte alors qu'il s'agit d'un produit de plus en plus rare et coûteux.

L'Alimentaire. La maintenance à la température adéquate de produits surgelés par exemple ne peut être contrôlée en permanence durant toute la « chaîne du froid » (de la fabrication à la vente). La qualité des produits en pâtit. De plus, pour les surgelés, les viandes par exemple, un problème se pose à la fabrication : il faut réaliser une surgélation qui suive une vitesse de descente en température adéquate afin que les cellules de la viande fraîche ne se dégradent pas. Ainsi, la viande ne sera pas flasque et molle et donc de qualité moindre, lors de la décongélation pour la consommation. Un contrôle continu de la fabrication à la vente permettrait un meilleur niveau de qualité, permettrait de garantir la non toxicité du produit.

Le domaine de l'industrie. La robotisation et l'automatisation vont en augmentant, et en s'étendant à toutes les branches de l'industrie, un contrôle continu de la qualité des mécanismes devra s'effectuer. Des composants électroniques, par exemple, ne doivent pas dépasser des seuils de température pour ne pas tomber en panne ; un « marqueur » judicieusement placé permettrait de détecter la panne et de gagner ainsi un temps (et éviter une perte financière) appréciable.

Ces seuls trois exemples d'utilisation de ce mécanisme de contrôle dans des domaines différents montrent le gain que peut permettre ce mécanisme (coût de la perte des produits sanguins stockés, coût de l'absorption de produits frelatés, coût des arrêts de mécanismes en panne, etc...). Il s'avère donc intéressant et nécessaire de développer des techniques de contrôles continus simples et souples, pouvant s'adapter à des domaines distincts. Le type de procédé que nous allons décrire peut répondre à ces problèmes et devenir d'une utilisation courante. Il peut être utilisé tout au long de la chaîne fabrication-vente, mais aussi à tout moment choisi de cette chaîne (à la fabrication ou pendant le traitement ou pendant le stockage ou de la distribution ou à la vente).

Nous allons donc associer à l'objet contrôlé quel qu'il soit un dispositif modulable qui va du plus simple au plus compliqué puisqu'il peut indiquer soit une température (température d'utilisation ou de fonctionnement) soit plusieurs températures (température d'utilisation ou de fonctionnement et plusieurs températures seuils).

Ce mécanisme-indicateur-polyvalent est caractérisé par diverses propriétés :

Il permet la visualisation simple du dépassement de seuil(s) de température(s) ;

Il est irréversible une fois déclenché ;

Les seuils de températures à détecter peuvent être multiples puisque ce mécanisme remplit une triple fonction : le contrôle de descente en température, le contrôle de remontée en température, le contrôle de la température d'utilisation ;

La vitesse d'autodéclenchement est très rapide ;

Il permet une grande précision dans la détection de la température fixée au $1/10^e$ de degré près ;

Il couvre une très large gamme de températures : de — 70 ºC à plusieurs centaines de degrés ;

Le temps de réponse nécessaire à l'autodéclenchement du mécanisme est modulable, on peut ainsi ménager des temps de retard.

Ce mécanisme s'auto-déclenche. L'armement du mécanisme se fait de lui-même, sans aucune intervention ou manipulation extérieures ;

Il est, de ce fait, inviolable. On ne peut modifier le marquage opéré par le(s) dépassement(s) de seuil(s) ;

Il est quasiment indestructible du fait de la solidité des différents éléments qui le composent. Il peut donc être soit récupéré, soit jeté après utilisation. Il a, de plus, une grande longévité ;

Il est fabriqué indépendamment de sa température d'utilisation, même lorsqu'il s'applique à de très basses températures ;

Il s'adapte au produit qu'il va contrôler : les corps servant à visualiser les anomalies en température peuvent être divers et simples. Lorsqu'il s'agira de contrôler des produits sanguins ou alimentaires, ces corps pourront être simplement de l'eau et des colorants non toxiques, les matériaux utilisés pour chaque élément étant eux-mêmes non toxiques ;

Enfin, sa taille peut être variée (au plus petit : 20 mm environ).

En ce qui concerne l'idée d'un contrôle continu par des témoins (thermomètres, marqueurs...) des dizaines de brevets existent.

Dès 1925, le brevet US 15 35 536, utilise un corps dont la température de fusion est celle, limite, à ne pas dépasser pour le stockage. Ce corps est combiné à un colorant, de sorte que si la température de stockage atteint cette température limite, le corps se liquéfie et se colore au contact du colorant. Cette coloration, qui permet de visualiser la température limite est irréversible, même si, ultérieurement la température baisse et que consécutivement le corps se solidifie à nouveau.

A partir de cette idée simple, de nombreux brevets ont été déposés dans le monde, partant toujours du principe de passage d'un corps de l'état solide à l'état liquide dès le dépassement vers le haut de la température critique et en proposant des améliorations.

Le brevet français nº 15 15 914 en est un exemple type. Il s'agit d'un procédé concernant le contrôle de la conservation de produits congelés ou surgelés, procédé qui améliore et complète celui décrit dans un brevet antérieur de l'un des demandeurs (nº 1 391 673 du 7.12.62). La différence est que, si dans le brevet antérieur (nº 1 391 673), le témoin doit être stocké à basse température pour éviter qu'il se liquéfie par accident, par contre, dans le brevet (1 515 914), un armement du système est imaginé afin d'éviter le stockage à basse température. L'armement consiste en une capsule mince contenant le liquide, qui est ainsi séparé du colorant à température ambiante. Lors du refroidissement pour atteindre la température basse de stockage, le liquide se solidifie et casse l'ampoule : il est alors en contact avec le colorant (ou le papier absorbant si le liquide est déjà colorant), mais il est solide et non poreux, rien ne se passe. En revanche, si la température remonte au-dessus du seuil critique, le solide redevient liquide et la coloration est alors visible.

De nombreux brevets ont été déposés autour de ce type d'armement, très peu sont appliqués car ils ne réunissent pas, en fait, toutes les caractéristiques suivantes : irréversibilité, sûreté, indestructibilité, inviolabilité et compatibilité avec le milieu auquel se fait l'application ; caractéristiques indispensables à une manipulation et au fonctionnement d'un procédé de contrôle.

Le document EP-A-98 646 concerne un dispositif réagissant à un signal froid, fourni par détente d'un liquide cryogénique, tel que fréon, butane ou propane. Ce dispositif comprend un élément en alliage à mémoire de forme disposé dans le courant de sortie du gaz détendu et changeant de forme sous l'effet des différences de température. Ce dispositif peut, par exemple, être utilisé pour commander une soupape ou pour détecter le niveau d'un liquide cryogénique.

L'objet de la présente invention est de remédier à ces inconvénients.

A cet effet, selon un premier mode de mise en œuvre, ce dispositif, du type dans lequel le dépassement d'une température déterminée se traduit par une coloration irréversible par mélange d'un corps liquide à cette température avec au moins un colorant, ce dispositif comportant un boîtier au moins partiellement transparent permettant de visualiser chaque coloration obtenue correspondant à une température déterminée, est caractérisé en ce que le corps liquide et chaque colorant sont placés chacun dans une chambre distincte ménagée à l'intérieur du boîtier, ces chambres communiquant par au moins un passage auquel est associé un obturateur réalisé en un alliage à mémoire de forme à double effet, c'est-à-dire susceptible de déformations réversibles, dont la température de transformation est sensiblement égale à la température déterminée devant être visualisée, cet obturateur étant susceptible selon son état de faire communiquer ou d'isoler les chambres.

Ces alliages à mémoire de forme sont des alliages qui peuvent subir une déformation de plusieurs pour cent (jusqu'à 10 % dans certains cas) dans une certaine gamme de températures et retrouver intégralement leur forme initiale après réchauffage. Cet effet est associé à une transformation structurale réversible de type martensitique qui se produit entre la température de déformation et la température à laquelle l'échantillon est chauffé.

Les transformations martensitiques mettent en jeu des déformations macroscopiques qui disparaissent lors de la transformation inverse.

On ne peut, comme pour les transformations avec diffusion, inhiber les transformations martensitiques par une vitesse de refroidissement (ou de réchauffage) suffisamment importante, celles-ci s'effectuent même lors d'une trempe rapide.

En général, ainsi que le montre la figure 2, cette transformation de type martensitique s'effectue à température décroissante, elle commence à une température $\theta_1$ et devient complète à une température $\theta_2$.

La transformation inverse commence à une température $\theta_3$ (supérieure à la température $\theta_2$) et se termine à une température $\theta_4$ (supérieure à la température $\theta_1$) s'il existe un phénomène d'hystérésis.

S'il n'y a pas d'hystérésis les températures $\theta_1$ et $\theta_2$ sont respectivement égales aux températures $\theta_4$ et $\theta_3$.

En outre, à chaque température comprise entre les températures limites $\theta_1$ et $\theta_2$ correspond un certain taux de transformation de type martensitique, indépendant du temps, et par conséquent un certain taux de déformation A ˙ %. de l'alliage, la déformation maximale étant bien évidemment obtenue à la température $\theta_2$.

Dans le cas présent, la coloration sera à une température déterminée déclenchée par la déformation d'un alliage à mémoire de forme à cette température déterminée.

Ainsi, il n'est plus nécessaire, bien que cela soit toujours possible de prévoir un corps dont la température de fusion soit égale à celle déterminée devant être indiquée par le dispositif.

Il existe à ce jour, de nombreux matériaux qui présentent cet effet de mémoire de forme :

(codification internationale) (at : atome pour cent).

Ag - 45 at Cd
Cu - 25 at Al
Cu - 15 at Sn
Cu - Zn - Al
Ni - 50 at Ti
Fe - 27 à 33 at Ni
Co - 19 à 30 at Ni
Au - 46 à 50 at Cd
Ti - 45 Ni - 5 Fe
Mn - 5 à 20 at Cu

En plus de ces matériaux métalliques, des céramiques, les hauts polymères (polyéthylène, polybutène 1 isostatique) et certains matériaux biologiques tels la kératine, présentent des transformations martensitiques.

Toujours dans le cadre de l'exemple du sang, certains alliages ternaires Cu-Zn-Al présentent, selon leurs pourcentages respectifs, au voisinage de la température ambiante une mémoire de forme réversible quasiment complète.

Actuellement, plusieurs sociétés fabriquent des alliages à mémoire de forme, citons pour mémoire :
— Raychem Corp. (California 94025 USA)
— Delta memory metal company (Ipsurch Suffolk England)
— Proteus (marque commerciale de Instuutmetallkonde, et Métallurgie Hoboken-Overpelt).

Le fonctionnement de ce dispositif est le suivant :

EP 0 153 259 B1

Lorsque la température déterminée devant être visualisée est atteinte, l'alliage à mémoire de forme subit une transformation structurale, de type martensitique, accompagnée d'une déformation et rétablit la communication entre les chambres contenant le corps liquide à cette température et le ou les colorants. Le corps, liquide, est donc coloré, ce qui permet de visualiser que la température déterminée a été atteinte.

Dans le cas où une température déterminée devant être indiquée est supérieure à la température de stockage du produit, selon une forme particulièrement avantageuse de l'invention, le corps associé à cette température déterminée a une température de fusion sensiblement égale à celle déterminée et la transformation de type martensitique de l'alliage à mémoire de forme associé s'effectue avec hystérésis.

Bien entendu, dans le cas où plusieurs températures déterminées doivent être indiquées, un même colorant peut être associé à différents corps associés chacun à une température déterminée, un obturateur en un alliage à mémoire de forme étant associé à chaque corps et obturant le passage entre la chambre contenant ce corps et celle contenant le colorant.

Selon un second mode de mise en œuvre, ce dispositif, du type dans lequel le dépassement d'une température déterminée se traduit par une coloration irréversible par mélange d'un corps liquide à cette température avec au moins un colorant, est caractérisé en ce que chaque corps liquide, associé à une température déterminée et liquide à cette température et chaque colorant associé à ce corps et donc à la température déterminée, est placé dans une chambre distincte, respectivement (14, 15 ; 16, 18 ; 24, 25 ; 26, 28 ; 36, 35 ; 44, 52 ; 44, 53 ; 46, 45), ménagée à l'intérieur du boîtier, respectivement (13, 23, 33, 43), ces chambres communiquant entre elles à l'aide d'au moins un passage et étant séparées par au moins un dispositif de type piston, respectivement (17, 27, 37, 47, 58) actionné par au moins un ressort (19, 29, 38, 48) formé en un alliage à mémoire de forme à double effet, c'est-à-dire susceptible de déformations réversibles, dont la température de transformation est sensiblement égale à celle déterminée, le dispositif de type piston (17, 27, 37, 47, 58) étant déplacé sous l'effet du ressort (19, 29, 38, 48) entre une position dans laquelle il libère le (ou les) passage(s) entre les chambres contenant chaque corps et chaque colorant associés à cette température déterminée, et une position dans laquelle il ferme ce (ou ces) passage(s).

Selon l'alliage à mémoire de forme utilisé, le ressort formé dans cet alliage s'allonge ou se raccourcit lorsque la température de transformation de l'alliage est atteinte.

Avantageusement, dans le cas où deux ou plusieurs températures déterminées sont comprises entre les températures limites de la transformation de type martensitique d'un alliage à mémoire de forme, dont la température de transformation est sensiblement égale à la température déterminée supérieure à indiquer les différentes déformations de ce ressort aux différentes températures déterminées sont utilisées pour déclencher chaque coloration correspondant à chaque température déterminée.

Avantageusement, une capsule fragile contenant un colorant est placée à l'intérieur de la chambre contenant le corps associé à une température déterminée, cette capsule étant apte à être brisée par le dispositif de type piston lorsque la température déterminée est atteinte.

Avantageusement, dans le cas où une température de seuil déterminée est supérieure à la température de stockage du produit, et est atteinte par celui-ci lors du simple passage de la température de fabrication à la température de stockage, un ensemble dont la forme a été judicieusement choisie permet de réaliser l'auto-armement du dispositif indicateur lorsque cette température de seuil déterminée est atteinte, lors du passage de la température de fabrication à la température de stockage. Ces moyens d'auto-armement évitent ·le déclenchement de la coloration lors du passage de la température de fabrication à celle de stockage, mais permettent le déclenchement de cette coloration lorsque, ultérieurement, cette température de seuil est atteinte à partir de la température de stockage.

Avantageusement, afin de réaliser l'auto-armement du dispositif indicateur à une température déterminée, des moyens d'obturation aptes à être neutralisés obturent le passage entre les chambres contenant le corps et le (ou les) colorant(s) associés à cette température déterminée : des moyens à piston, associés à un ressort en un alliage de forme dont la température de transformation est sensiblement égale à celle déterminée, étant :

— aptes à neutraliser ces moyens d'obturation lorsque la température atteint la température déterminée,

— à obturer ce passage entre les chambres lorsque la température devient inférieure à celle déterminée,

— et à le libérer lorsque la température devient supérieure à celle déterminée.

Les moyens d'obturation peuvent être formés..par exemple par un bouchon éjectable ou par un film perforable.

Bien entendu, ces différentes formes de réalisation du dispositif indicateur peuvent être combinées entre elles de multiples façons, afin d'obtenir des dispositifs indicateurs aptes à indiquer différentes températures déterminées.

De toute façon, la présente invention sera mieux comprise et d'autres caractéristiques seront mises en évidence à l'aide de la description qui suit en référence au dessin schématique annexé représentant à titre d'exemples non limitatifs plusieurs formes d'exécution de ce dispositif indicateur :

— Figure 1 est un diagramme indiquant les diverses possibilités de variations de températures d'un produit ou d'un mécanisme à différentes étapes de sa vie ;

EP 0 153 259 B1

— Figure 2 est le cycle d'hystérésis de la transformation martensitique d'un alliage à mémoire de forme :

— Figure 3 est une vue similaire à figure 1 dans le cas où le produit est une poche de sang ;

— Figures 4 à 10 sont des vues en coupe longitudinale de différents dispositifs indicateurs permettant la détection de deux températures seuils, le dispositif des figures 7 à 10 étant représenté dans ces figures respectivement aux températures de 37 °C, 4 °C, 2 °C et 6 °C.

— Figures 11 et 12 sont des vues en coupe longitudinale de différents dispositifs indicateurs permettant la détection de trois températures.

— Figure 13 est une vue similaire à figure 1 dans le cas de produits surgelés ou congelés.

— Figures 14 à 17 sont des vues en coupe longitudinale d'un dispositif indicateur pour produits surgelés respectivement aux températures de 20 °C, — 35 °C, — 35 °C à — 18 °C et — 15 °C.

Exemple 1

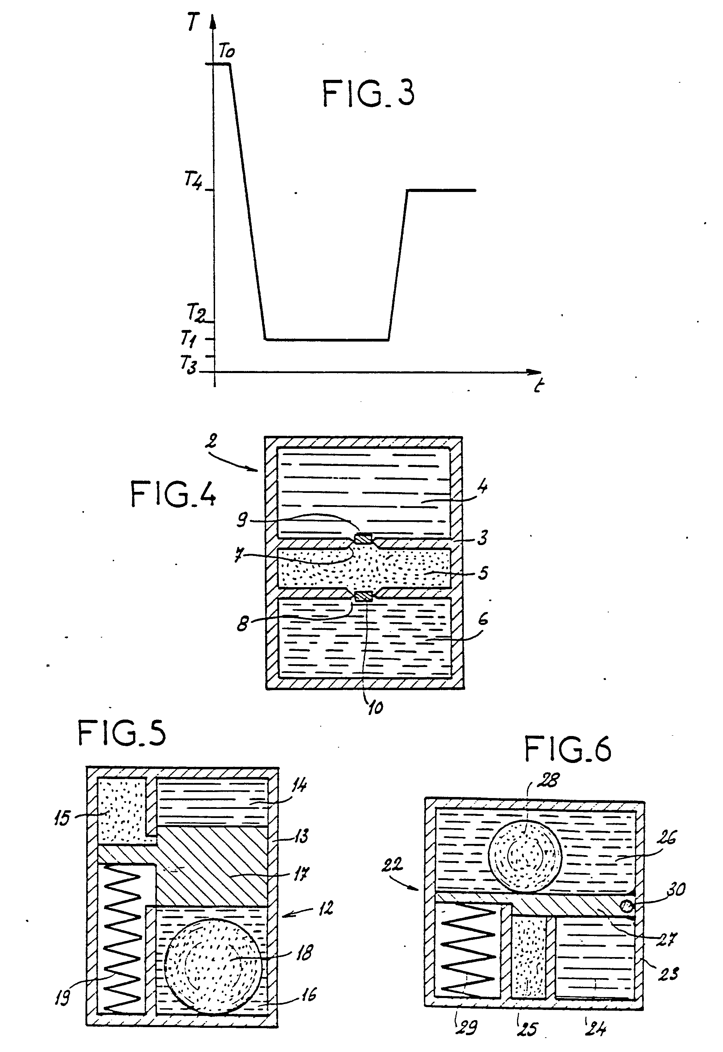

Dispositif permettant la détection de deux températures seuils (figures 3 à 10) :

Le dispositif indicateur de températures selon l'invention va être décrit ci-après en application à un exemple bien particulier qui est celui de la fabrication, de la conservation et de l'utilisation des poches de sang destinées aux transfusions sanguines. En effet, la conservation de sang pose des problèmes intéressants compte tenu notamment de la précision (4 °C ± 2 °C) avec laquelle la température de conservation doit être maintenue.

La figure 3 illustre par un diagramme les différentes températures atteintes par les poches de sang à différents stades de leur fabrication et utilisation c'est-à-dire les variations de température (T) de ce produit en fonction du temps (t).

Le sang est prélevé à une température de 37 °C (T0), il est conditionné dans des poches puis sa température est abaissée jusqu'à 4 °C qui constitue sa température de stockage (T1). Ce sang est stocké pendant un certain temps, au cours duquel sa température ne doit pas monter au-dessus de 6 °C (T2) ou descendre au-dessous de 2 °C (T3). Enfin, il doit être porté à une température d'au-moins 20 °C (T4) avant d'être utilisé.

La figure 4 montre une première forme de réalisation du dispositif indicateur selon l'invention, appliqué au contrôle de la température pour la conservation du sang.

Le sang devant être maintenu entre 2 °C et 6 °C pour conserver toutes ses qualités, le dispositif indicateur doit pouvoir indiquer si ces températures ont été dépassées tout en pouvant être associé aux poches de sang dès leur fabrication.

L'indicateur (2) se présente essentiellement sous la forme d'un boîtier (3) transparent en totalité ou en partie et pouvant être par exemple en polystyrène ou en un autre matériau synthétique. Ce boîtier (3) délimite intérieurement trois chambres (4, 5, 6) contenant respectivement un premier corps dont le point de fusion est à 6 °C, un colorant et un second corps liquide à 2 °C, ce corps pouvant être de l'eau. Les chambres (4) et (5) communiquent à l'aide d'un passage (7), les chambres (5) et (6) communiquent à l'aide d'un passage (8).

Ces passages (7) et (8) sont fermés respectivement par un bouchon (9) en un premier alliage à mémoire de forme dont le point de transformation est sensiblement à 6 °C' et par un bouchon (10) en un second alliage à mémoire dont le point de transformation est à 2 °C.

Lorsque le sang est prélevé, il se trouve à une température de 37 °C, l'indicateur (2) est fixé sur la poche de sang, par exemple par agraffage de façon à ne pas pouvoir être remplacé ultérieurement par un autre indicateur. La poche de sang, une fois remplie, est portée à sa température de conservation soit 4 °C. Lors du passage de 37 °C à 4 °C, la température seuil de 6 °C est atteinte. A cette température le premier alliage formant le bouchon (9) subit un rétreint du fait de sa transformation et libère donc, le passage (7) entre les chambres (4) et (5). Cependant à cette même température de 6 °C, le premier corps, qui peut être du benzène, du tétradécane... etc, se solidifie et n'étant pas poreux, n'est pas coloré par le colorant de la chambre (5).

Par contre si par la suite, au cours du stockage, la température du sang dépasse 6 °C, le premier corps contenu dans la chambre (4) redevient liquide et se colore au contact du colorant de la chambre (5), le bouchon (9) étant encore rétréci, du fait de l'hystérésis accompagnant la transformation du premier alliage à mémoire de forme. Le dépassement de température peut donc être détecté visuellement par la coloration du premier corps. De même si au cours du stockage, la température descend au-dessous de 2 °C, le second alliage de forme se transforme à son tour avec rétreint et libère le passage (8) entre les chambres (5) et (6). Le second corps contenu dans la chambre (6) se colore donc au contact du colorant et de même que précédemment, le dépassement de la température seuil est indiqué par la coloration du second corps.

Il est à noter que lorsque le seuil de 6 °C est atteint par passage de la température ambiante à celle de stockage, un certain décalage doit être introduit afin d'éviter que le bouchon (9) ne se rétrécisse avant que le corps de la chambre (4) ne soit totalement solidifié. Ce décalage peut être obtenu notamment en retardant le rétrécissement du bouchon (9) soit par un isolement thermique formé par exemple par une plus grande épaisseur de matière autour de ce bouchon, soit en prenant un alliage à mémoire de forme

6

dont la température de transformation soit légèrement inférieure à 6 °C, afin que le rétrécissement commence plus tard.

Bien entendu, le colorant utilisé doit être compatible avec chacun des corps utilisés, ce colorant peut être formé par un colorant alimentaire, un indicateur acide-base... etc. Il pourrait être également formé par des billes de couleur aptes à se mélanger aux corps liquides, ou par tout autre dispositif similaire et apte à indiquer une coloration.

Cet indicateur de température réagit très rapidement lorsqu'une température seuil est dépassée, du fait que la transformation martensitique est très rapide. Cependant une augmentation du temps de réponse de cet indicateur, selon les conditions fixées par les utilisateurs, peut être obtenue très simplement et facilement en faisant varier par exemple l'épaisseur du boîtier en polystyrène (3).

Bien entendu, les bouchons (9, 10) peuvent avoir une forme quelconque, ils peuvent notamment avoir la forme de lames s'étendant sur toute une section transversale du boîtier entre les chambres respectivement (4 et 5) et (5 et 6).

Les figures 5 et 6 illustrent une autre forme de réalisation de cet indicateur de températures.

De même que précédemment, l'indicateur (12) de la figure 5 comprend un boîtier (13). Ce boîtier (13) délimite à l'aide d'un piston (17) essentiellement trois chambres (14, 15, 16). Ces chambres (14, 15, 16) contiennent de même que dans l'exemple précédent, respectivement un premier corps dont le point de fusion est à 6 °C, un colorant et un second corps liquide à 2 °C, ce corps pouvant être de l'eau. En outre, une capsule fragile (18) contenant un colorant, identique à celui de la chambre (15) ou différent est logée à l'intérieur de la chambre (16).

Le piston (17) occupe toute la section transversale du boîtier (13). Il est actionné par un ressort (19) en un alliage à mémoire de forme dont le point de début de transformation structurale $\theta_1$ est à 6 °C et dont le point d'achèvement de cette transformation $\theta_2$ est inférieur à 2 °C, cette transformation s'effectuant avec hystérésis et le ressort (19) diminuant de longueur au cours de celle-ci.

Lorsque le ressort (19) diminue de longueur, le piston (17) accompagne son mouvement. Ce piston (17) est conformé de telle façon qu'au début de son mouvement, à 6 °C, il libère le passage entre les chambres (14) et (15) et qu'à la fin de son mouvement à 2 °C, il comprime la capsule fragile (18) et la casse de façon à mettre en contact le colorant contenu dans celle-ci avec le second corps contenu dans la chambre (16).

Lorsque le sang est prélevé à 37 °C, la longueur du ressort (19) est telle que le piston (17) isole les chambres (15) et (14), et n'exerce aucun effort de compression sur la capsule fragile (18).

Lorsque le seuil de 6 °C est atteint lors du passage de la température de « fabrication » (37 °C) à celle de stockage (4 °C), le ressort (19) commence à se raccourcir, et le piston (17) commence à libérer le passage entre les chambres (14) et (15) ; cependant le premier corps contenu dans la chambre (14) étant devenu solide, aucune coloration de celui-ci n'est observée.

Si en cours de stockage, la température dépasse 6 °C, le premier corps devient liquide : le passage entre les chambres (14) et (15) étant libre une coloration est observée.

De même si la température descend au-dessous de 2 °C, le piston (17) comprime la capsule (18) et la casse, puisque le ressort (19) continue à se raccourcir ($\theta_2 \leqslant 2$ °C) et le second corps contenu dans la chambre (16) est coloré.

De même que précédemment cet alliage à mémoire de forme doit aussi présenter une transformation avec hystérésis, afin d'obtenir une coloration pour 6 °C. Un alliage de type 69,9 % Cu 26,1 % Zn et 4 % Al conviendrait.

La figure 6 montre un indicateur de températures (22) utilisant de même que celui de la figure 5, un seul élément en alliage à mémoire de forme, dont la transformation s'effectue avec hystérésis et ayant sensiblement la même structure que cet indicateur (12), c'est-à-dire comprenant trois chambres (24, 25, 26) contenant respectivement un premier corps dont le point de fusion est à 6 °C, un colorant et un second corps liquide à 2 °C, un colorant étant également contenu dans une capsule fragile (28) logée dans la chambre (26).

Cependant dans cet indicateur (22), le ressort (29) est en un alliage dont la transformation de type martensitique s'effectue avec allongement, toujours à partir de 6 °C, de sorte que l'élément agissant sur la capsule (28) et servant à séparer les chambres (24) et (25) n'a plus la forme d'un piston mais d'un levier (27) monté pivotant autour d'un axe (30).

Cet indicateur de températures (22) fonctionne de même façon que l'indicateur précédent ; lorsque la température remonte au-dessus de 6 °C, le ressort (29) reste allongé du fait de l'hystérésis ; le corps (24) fond et le colorant (25) peut alors se mélanger avec lui ; lorsque la température descend au-dessous de 2 °C, l'allongement du ressort (29) est tel que la pression exercée par le levier (27) sur la capsule (28) provoque la rupture de celle-ci et donc la rotation du second corps contenu dans la chambre (26).

De même que pour le premier dispositif indicateur (2), le temps de réponse de ces dispositifs indicateurs (12, 22) peut être modifié en faisant varier par exemple l'épaisseur du boîtier en polystyrène ou autre matière synthétique, ou par l'adjonction d'un matériau isolant.

Dans ces deux dernières formes de réalisation, l'emploi de ressorts en alliages à mémoire de forme permet d'exercer un effort de compression important sur la capsule fragile ; de sorte que ces capsules peuvent être choisies suffisamment résistantes pour éliminer tout risque de rupture de celles-ci lors de leur transport ou manipulation.

7

Maintenant, nous allons décrire avec les figures (7 à 10) un mécanisme différent.

Le mécanisme ne repose plus du tout sur l'existence d'un corps dont la température de fusion correspond à la température seuil de 6 °C, ni sur l'utilisation d'une capsule fragile. Cependant, il exige un matériau à mémoire ne présentant pas d'hystérésis, ou du moins dont l'hystérésis doit être compensée comme nous le verrons plus loin.

Ce dispositif indicateur (32) comprend un boîtier (33) en polystyrène ou autre matériau synthétique, au moins partiellement transparent. De même que pour les indicateurs (2), (12) et (22), le boîtier (33) délimite trois chambres (34, 35, 36).

Les chambres (34) et (36) contiennent un corps liquide respectivement aux températures de 6 °C et 2 °C, et qui peut être formé par de l'eau, la chambre (35) contient un colorant. Des passages (39, 40) sont ménagés respectivement entre les chambres (34, 35) et (35, 36). Un piston (37) actionné par un ressort (38) et ayant sensiblement la forme d'un T, est apte à se déplacer dans la chambre (35) et à obturer ou libérer selon son déplacement les passages (39, 40). Des renforcements (33a) du boîtier (33) au niveau de chaque passage (39, 40) forment un guidage pour le piston (37) au cours de ses déplacements. Un bouchon (41) ou un film transparent pouvant être perforé obture le passage (39). Le ressort (38) est en un alliage à mémoire de forme dont la transformation de type martensitique commence à 6 °C et s'achève après 2 °C ($\theta_2 \leqslant 2$ °C). Cette transformation s'effectuant sans hystérésis et avec rétreint, de telles propriétés sont obtenues avec certains alliages ternaires de cuivre, zinc et aluminium.

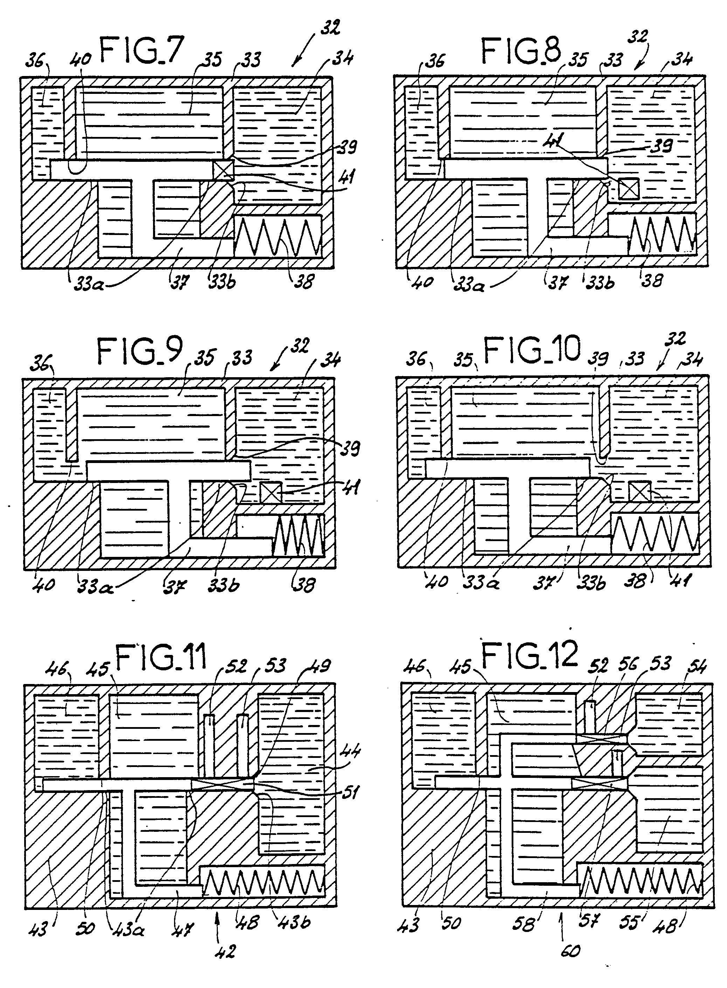

A 37 °C, ainsi que le montre la figure 7, le piston (37) obture le passage (40) entre les chambres (36) et (35), le passage (39) entre les chambres (34) et (35) étant obturé uniquement par un bouchon ou film perforable (41), et le ressort (38) est à l'état de repos.

Lorsque le dispositif indicateur (32) est amené à la température de stockage (4 °C) (Cf. Figure 8), le ressort (38) commence à se raccourcir à 6 °C, le piston (37) qui est lié à ce ressort, est entraîné par celui-ci vers la droite dans la figure, il éjecte le bouchon (41) (ou perfore le film selon le cas) et atteint une position intermédiaire à 4 °C, dans laquelle il obture à la fois le passage (39) et le passage (40) et empêche toute communication entre les chambres (34) et (35) et (35) et (36), et donc toute coloration. Des rampes (33b) peuvent être prévues au niveau du passage (39) pour faciliter l'éjection du bouchon (41).

Lorsque la température descend au-dessous de 2 °C (Cf. Figure 9), le ressort (38) dont la transformation martensitique n'est pas achevée à cette température, raccourcit encore et entraîne le piston (37) tout à fait vers la droite dans une position dans laquelle il libère le passage (40), tout en continuant à obturer le passage (41). On obtient donc une coloration dans la chambre (36) indiquant que la température de 2 °C a été atteinte.

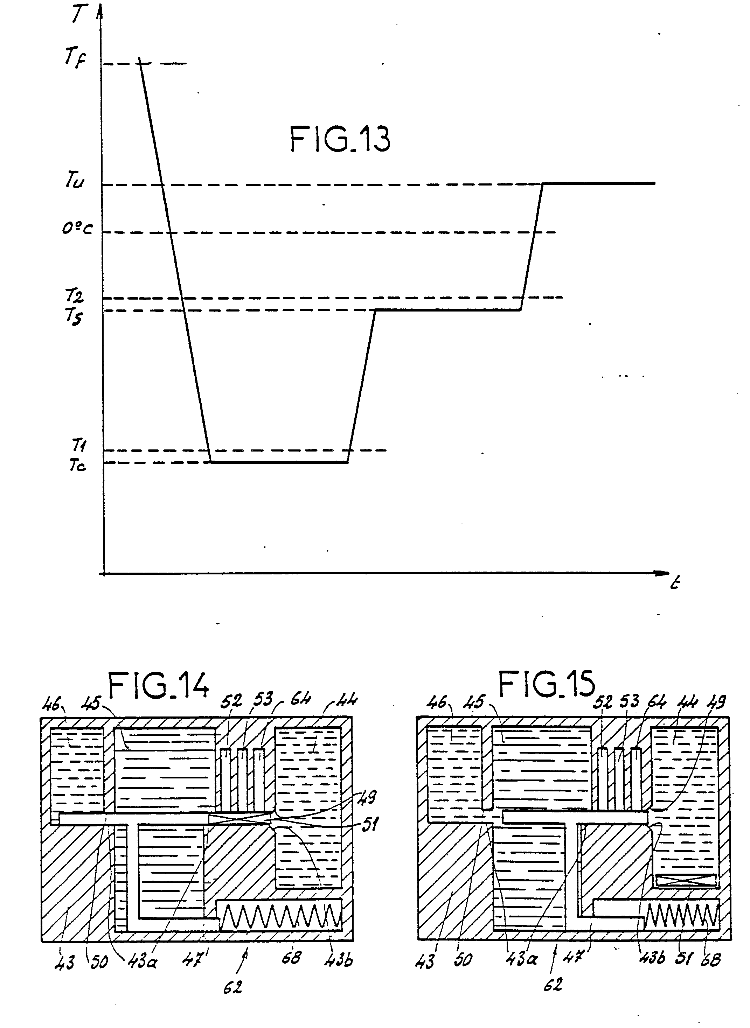

Si au contraire la température monte au-dessus de 6 °C (Cf. Figure 10) à partir de la température de stockage, le ressort (38) subit la transformation inverse, avec allongement. Le piston (37) est alors déplacé sur la gauche dans la figure 10 de façon à reprendre la position initiale qu'il occupait à 37 °C (par exemple) et à obturer le passage (40) et à libérer le passage (39). Comme celui-ci n'est plus obturé par le bouchon (41), le passage entre les chambres (35) et (34) est libre et on obtient une coloration dans la chambre (34) indiquant que la température de 6 °C a été atteinte. Ceci est possible parce que le ressort ne présente pas de phénomène d'hystérésis.

Le bouchon amovible (41) est prévu pour boucher le passage (39) et empêcher toute coloration lors du passage du seuil de 6 °C lorsque la température du produit est abaissée à sa valeur de stockage.

Bien entendu, l'alliage à mémoire de forme pourrait également être choisi de façon que sa transformation s'effectue avec allongement et non pas rétreint.

## Exemple 2

Dispositif permettant la détection de plusieurs températures : 2 températures seuils plus une température d'utilisation.

La figure 11 montre un dispositif indicateur (42) du même type que le dispositif indicateur (32) destiné à indiquer trois températures au lieu de deux. Ce dispositif indicateur (42) peut être toujours utilisé pour contrôler les températures atteintes par une poche de sang et pour indiquer notamment la température de 22 °C à laquelle doit être portée une poche de sang, qui vient d'être stockée avant d'être utilisée.

Ce dispositif a sensiblement la même forme que le dispositif précédent (32). De même que celui-ci il montre un boîtier (43), trois chambres (44, 45, 46). Les chambres (44, 46) contiennent de l'eau, la chambre (45) un colorant. Les passages (49, 50) entre ces chambres (44, 45, 46), peuvent être obturés respectivement par un piston (47) et/ou par un bouchon (51) ou film transparent pouvant être neutralisé. Le piston (47) est actionné par un ressort (48) en un alliage à mémoire de forme dont la température de début de transformation est 22 °C, cette transformation s'effectuant sans hystérésis et avec rétreint, et la fin de cette transformation étant obtenue pour une température inférieure à 2 °C. De même que pour le dispositif précédent des guidages (43a) sont prévus pour le piston (47) lors de ses déplacements, ainsi que des rampes (43b) pour l'éjection du bouchon (51).

Deux chambres supplémentaires (52, 53) sont également prévues entre les chambres (45) et (44), une de ces chambres (52) pouvant être confondue avec la chambre (45). Ces chambres (52, 53) contiennent chacune un colorant ou un liquide ayant une couleur primaire, par exemple respectivement rouge, jaune.

Ce dispositif (42) fonctionne de la même façon que le dispositif précédent. Lors du passage de la température de fabrication à celle de stockage, le ressort (48) commence à se rétracter dès que la température de 22 °C est atteinte, et le piston (47) se déplace vers la droite. Lorsque la température de 2 °C est atteinte, le piston libère le passage entre les chambres (46) et (45) et une coloration est obtenue dans la chambre 46. Si la température remonte, le ressort s'allonge et le piston (47) se déplace sur la gauche, lorsqu'elle atteint 6 °C, la chambre (53) est en communication avec la chambre (44) et une coloration jaune est obtenue. Si la température atteint 22 °C, le piston (47) libère en outre le passage entre les chambres (52) et (44) et une coloration orange est obtenue dans la chambre (44), cette coloration indiquant que les températures de 6 °C et de 22 °C ont été atteintes.

Ce dispositif peut bien évidemment être adapté à toutes sortes de températures, cependant si l'écart entre deux températures seuils à indiquer est trop important et dépasse environ 30 degrés, il n'est plus possible d'indiquer ces deux températures à l'aide d'un seul ressort en un alliage à mémoire de forme. Il est alors possible d'associer deux ressorts à mémoire de forme, dont les transformations de type martensitique s'effectuent dans des zones des températures complémentaires.

Les deux ressorts se raccourciront et s'allongeront à tour de rôle et interviendront pour déterminer des températures différentes.

En combinant ainsi plusieurs ressorts, des gammes de température de l'ordre de cent degrés Celsius (voir plusieurs centaines de degrés) peuvent être contrôlées avec un même dispositif indicateur avec indication si on le désire de températures intermédiaires, ce qui est particulièrement avantageux.

La figure 12 montre un dispositif indicateur (60) sensiblement identique au dispositif indicateur (42) dans lequel les mêmes éléments sont d'ailleurs indiqués par des références identiques.

Dans ce dispositif (60), les chambres (52) et (53) communiquent non plus avec la même chambre (44) mais avec deux chambres distinctes, respectivement (54) et (55). De ce fait, elles ont légèrement décalées dans l'espace et pourvues chacune d'un obturateur respectivement (56, 57) pouvant être éjecté par un piston (58). Le piston (58) a ainsi une forme légèrement différente et a sensiblement la forme d'un E apte à boucher par chacune de ses branches supérieures les passages entre les chambres (54, 55) et (52, 53).

Les températures de 6 °C et 22 °C sont alors indiquées par des colorations différentes ou égales dans les chambres respectivement (55, 54).

Bien entendu, la présente invention ne se limite pas aux seules formes d'exécution décrites ci-dessus à titre d'exemples non limitatifs.

Les divers modes de réalisation présentés ici peuvent être combinés entre eux d'une multitude de façons afin d'obtenir l'indicateur désiré dans une gamme de températures données.

Dans certains cas d'application (comme pour le sang), il est nécessaire d'employer des ressorts à alliage à mémoire de forme qui ne présentent pas de phénomène d'hystérésis.

Si dans la gamme de températures à détecter, il n'existe pas d'alliage à mémoire de forme sans hystérésis. Il faut coupler un alliage à mémoire de forme comportant une hystérésis avec un ressort conventionnel. Le ressort conventionnel permet de modifier le comportement de l'alliage à mémoire de forme et d'annuler sous contrainte l'hystérésis.

De même les chambres contenant de l'eau ou un autre corps et du colorant peuvent être inversées, ou bien certaines chambres peuvent être laissées vides ; la coloration peut être également indiquée à l'aide de billes, de poudres colorées passant d'une chambre à une autre ou de colorants en poudre se diluant avec les liquides contenus dans d'autres chambres... sans que l'on sorte pour autant du cadre de la présente invention.

Exemple 3

Dispositif permettant la détection de plusieurs températures : la température de fabrication plus une ou plusieurs températures seuils plus une température d'utilisation :

Cette application s'étend au domaine de l'alimentaire, par exemple au contrôle des produits congelés et surgelés.

En ce qui concerne les produits surgelés, le problème est double puisqu'il concerne la fabrication et la conservation.

La Figure 13 illustre par un diagramme les différentes températures T, atteintes par les produits surgelés à différents stades (t) de leur fabrication et de leur utilisation :

A partir de la température de fabrication (Tf) (en général il s'agit de la température ambiante), le produit est conditionné par une descente en température (Tc) au-dessous de la température de congélation (T1 de — 35 °C. Après congélation, le produit est conservé à une température de stockage (Ts) et ne doit pas dépasser la température limite (T2) de — 15 °C.

Pour être utilisé, il est remonté à une température d'utilisation supérieure à 0 °C (Tu).

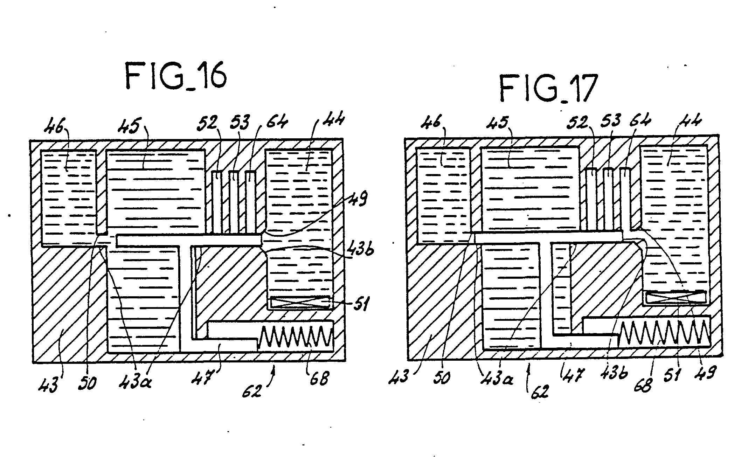

Les Figures 14 à 17 montrent un dispositif indicateur (62) de même type que le dispositif indicateur (42), permettant d'indiquer quatre températures différentes ; à savoir une température de congélation, et trois températures seuils par exemple : — 15 °C, — 10 °C, et — 5 °C.

Ce dispositif indicateur (62) a sensiblement la même structure que le dispositif indicateur (42) et ses éléments identiques à celui de ce dispositif (42) sont indiqués par les mêmes références. Il comporte en outre une chambre supplémentaire (64) contenant un colorant ayant une couleur primaire différente de celle des chambres (52) et (53) et pouvant par exemple être du bleu.

Le ressort (68) utilisé dans ce dispositif (62) est en un alliage à mémoire de forme, présentant une hystérésis d'une quinzaine de degrés.

Ce dispositif (62) fonctionne de la même façon que le dispositif (42). A la température ambiante (Figure 14), les communications entre les différentes chambres (44, 45, 46, 52, 53, 64) sont fermées à l'aide de piston (47) et du bouchon (51).

Lorsque le produit à surgeler atteint sa température de congélation (— 35 °C), le bouchon (51) est éjecté par le piston (47), qui s'est déplacé sur la droite.

Une coloration est obtenue dans la chambre (46) et indique que la température de — 35 °C a été atteinte (Cf. Figure 15).

Au cours du stockage, qui s'effectue entre — 35 °C et — 18 °C, le ressort (68) en alliage à mémoire de forme ne bouge pratiquement pas du fait de l'hystérésis et le piston (47) obture toujours le passage entre les chambres (52, 53, 64) et la chambre (44). Il ne se produit donc aucune nouvelle coloration (Cf. Figure 16).

Lorsque la température remonte à — 15 °C, le ressort (68) se rallonge et libère le passage entre la chambre (64) et la chambre (44) et une coloration, bleue en l'occurrence, est obtenue dans la chambre (44) (Cf. Figure 17).

De même lorsque les seuils de — 10 °C et — 5 °C sont atteints, les chambres (53, 52) sont successivement mises en communication avec la chambre (44) du fait du déplacement du piston (47) et des colorations successivement vertes (bleu-jaune) et marron (vert-rouge) sont obtenues dans la chambre (44).

Bien entendu plusieurs cases de colorants supplémentaires peuvent être prévues pour indiquer le passage d'autres seuils de température.

Les liquides utilisés devant rester liquides à de très basses températures (jusqu'à — 35 °C), ils seront formés par des mélanges alcoolisés dont les points de solidification sont très bas.

Remarque

Ce mécanisme convient pour repérer également la température d'utilisation si celle-ci n'est pas distante de plus d'une trentaine de degrés Celsius de la température de conservation. Dans le cas contraire, il sera nécessaire d'associer deux (ou plus) ressorts à mémoire comme nous l'avons envisagé précédemment (à propos de l'exemple 2).

## Revendications

1. Dispositif indicateur destiné au contrôle de températures déterminées, du type dans lequel le dépassement d'une température déterminée se traduit par une coloration irréversible par mélange d'un corps liquide à cette température avec au moins un colorant, ce dispositif comportant un boîtier au moins partiellement transparent permettant de visualiser chaque coloration obtenue correspondant à une température déterminée, caractérisé en ce que le corps liquide et chaque colorant sont placés chacun dans une chambre distincte (4, 5, 6) ménagée à l'intérieur du boîtier (3), ces chambres communiquant par au moins un passage (7, 8) auquel est associé un obturateur (9, 10) réalisé en un alliage à mémoire de forme à double effet, c'est-à-dire susceptible de déformations réversibles, dont la température de transformation est sensiblement égale à la température déterminée devant être visualisée, cet iobturateur (9, 10) étant susceptible, selon son état, de faire communiquer ou d'isoler les chambres (4, 5), (5, 6).

2. Dispositif indicateur selon la revendication 1, caractérisé en ce que pour le contrôle de plusieurs températures déterminées, un même colorant est associé à chacun des corps associés à une température déterminée, un obturateur (9, 10) en un alliage à mémoire de forme étant associé à chaque corps et obturant le passage, respectivement (7, 8) entre la chambre respectivement (4, 6) contenant ce corps et celle (5) contenant le colorant.

3. Dispositif indicateur destiné au contrôle de températures déterminées, du type dans lequel le dépassement d'une température déterminée se traduit par une coloration irréversible par mélange d'un corps liquide à cette température avec au moins un colorant, caractérisé en ce que chaque corps liquide associé à une température déterminée et liquide à cette température et chaque colorant associé à ce corps et donc à la température déterminée, est placé dans une chambre distincte, respectivement (14, 15 ; 16, 18 ; 24, 25 ; 26, 28 ; 36, 35 ; 44, 52 ; 44, 53 ; 46, 45), ménagée à l'intérieur du boîtier, respectivement (13, 23, 33, 43), ces chambres communiquant entre elles à l'aide d'au moins un passage et étant séparées par au moins un dispositif de type piston, respectivement (17, 27, 37, 47, 58) actionné par au moins un ressort (19, 29, 38, 48) formé en un alliage à mémoire de forme à double effet, c'est-à-dire susceptible de déformations réversibles, dont la température de transformation est sensiblement égale à celle déterminée, le dispositif de type piston (17, 27, 37, 47, 58) étant disposé sous l'effet du ressort (19, 29, 38, 48) entre une position dans laquelle il libère le (ou les) passage(s) entre les chambres contenant chaque corps et chaque colorant associés à cette température déterminée, et une position dans laquelle il ferme ce (ou ces) passage(s).

4. Dispositif indicateur selon la revendication 3, caractérisé en ce qu'une capsule fragile (18, 28) contenant un colorant est placée à l'intérieur d'une chambre contenant le corps associé à une température déterminée, cette capsule étant apte à être brisée par le dispositif de type piston lorsque cette température est atteinte.

5. Dispositif indicateur selon l'une quelconque des revendications 1 à 4, caractérisé en ce que, dans le cas où une température déterminée devant être indiquée, est supérieure à la température de stockage $(T_1)$ du produit, le corps, associé à cette température déterminée, a une température de fusion sensiblement égale à celle déterminée et la transformation de type martensitique de l'alliage à mémoire de forme associé (9) s'effectue avec hystérésis.

6. Dispositif indicateur selon l'une quelconque des revendications 3 à 5, caractérisé en ce que, dans le cas où deux ou plusieurs températures déterminées sont comprises entre les températures limites $(\theta_1, \theta_2)$ de la transformation de type martensitique d'un alliage à mémoire de forme, la température de transformation $(\theta_1)$ de cet alliage étant sensiblement égale à la température déterminée la plus élevée, les différentes déformations de ce ressort aux différentes températures déterminées sont utilisées pour déclencher chaque coloration correspondant à chaque température déterminée.

7. Dispositif indicateur selon l'une quelconque des revendications 3 à 6, caractérisé en ce que, dans le cas où une température de seuil déterminée est supérieure à la température de stockage du produit, et est atteinte par celui-ci lors du simple passage de la température de fabrication à la température de stockage, des moyens d'auto-armement (41, 51, 56, 57) sont prévus pour réaliser le fonctionnement du dispositif indicateur (32, 42, 60) lorsque cette température de seuil déterminée est atteinte, lors du passage de la température de fabrication à la température de stockage.

8. Dispositif indicateur selon la revendication 7, caractérisé en ce que, afin de réaliser l'auto-armement du dispositif indicateur à une température déterminée, des moyens d'obturation (41, 51, 56, 57) aptes à être neutralisés obturent le passage (39, 49) entre les chambres contenant le corps et le (ou les ) colorant(s) associés à cette température déterminée, des moyens à piston (37, 47, 48), associés à un ressort en un alliage à mémoire de forme dont la température de transformation est sensiblement égale à celle déterminée, étant aptes à neutraliser ces moyens d'obturation (41, 51, 56, 57) lorsque la température atteint la température déterminée, à obturer ce passage entre les chambres lorsque la température devient inférieure à celle déterminée.

9. Dispositif indicateur selon la revendication 8, caractérisé en ce que les moyens d'obturation aptes à être neutralisés sont formés par un bouchon apte à être éjecté (41, 51, 56, 57) ou par un film apte à être perforé par le piston associé (37, 47, 58).

10. Dispositif selon l'une quelconque des revendications 3 à 9, caractérisé en ce que, dans le cas où l'intervalle de température entre deux températures déterminées est supérieur à l'intervalle des températures de transformation $(\theta_1, \theta_2)$ de l'alliage à mémoire de forme du ressort associé, dont la température de début de transformation $(\theta_1)$ est égale à la température déterminée supérieure, au moins un autre ressort en un second alliage à mémoire de forme dont l'intervalle de température de transformation $(\theta_1, \theta_2)$ est complémentaire de celui du premier alliage est associé à celui-ci.

11. Dispositif indicateur selon l'une quelconque des revendications 3 à 10, caractérisé en ce que les alliages à mémoire de forme utilisés pour former les ressorts (38, 48) ne présentent pas d'hystérésis pour leur transformation martensitique.

12. Dispositif indicateur selon l'une quelconque des revendications précédentes, caractérisé en ce que la coloration, indiquant qu'une température déterminée a été atteinte, peut être obtenue par passage d'un liquide coloré ou de billes colorées d'une chambre à une autre, par mélange d'un corps liquide à cette température avec un colorant liquide ou en poudre ou autre.

13. Dispositif indicateur selon l'une quelconque des revendications 3 à 10, caractérisé en ce que les alliages à mémoire de forme utilisé pour former chaque ressort (68) présentent une hystérésis pour leur transformation martensitique.

## Claims

1. An indicating device intended for the monitoring of specified temperatures, of the type in which passing through a specified temperature is evidenced by an irreversible colouration by the mixture of a body that is liquid at that temperature with at least one colouring agent, this device comprising a casing that is at least partially transparent, allowing each colouration obtained corresponding to a specified temperature to be made evident, characterized in that the liquid body and each colouring agent are placed in separate chambers (4, 5, 6) provided inside the casing (3), these chambers communicating by at least one passage (7, 8) with which is associated a blocking unit (9, 10) produced from an alloy having two-way shape memory, that is to say capable of reversible deformations, the transformation temperature of which is approximately equal to the specified temperature that requires to be made evident, this blocking unit (9, 10) being capable, according to its state, to make the chambers (4, 5) (5, 6) communicate with one another or to isolate them from one another.

2. An indicating device according to Claim 1, characterized in that for the monitoring of several specified temperatures a single colouring agent is associated with each of the bodies associated with a specified temperature, a blocking unit (9, 10) of an alloy witrh shape memory being associated with each body and blocking the passage (7, 8), respectively between the respective chamber (4, 6) containing this body and that (5) containing the colouring agent.

3. An indicating device intended for the monitoring of specified temperatures, of the type in which passing through a specified temperature is evidenced by the irreversible colouration of a body that is liquid at that temperature by at least one colouring agent, characterized in that each liquid body that is associated with a specified temperature and is liquid at that temperature is placed in a separate chamber (14, 15 ; 16, 18 ; 24, 25 ; 26, 28 ; 36, 35 ; 44, 52 ; 44, 53 ; 46, 45 respectively), provided inside the casing (13, 22, 33, 43 respectively), these chambers communicating with one another by means of at least one passage and being separated by at least one device of piston type (17, 27, 37, 47, 58 respectively) driven by at least one spring (19, 29, 38, 48) formed in an alloy having two-way shape memory, that is to say capable of reversible deformation, the transformation temperature of which is is approximately equal to that specified, the device of piston type (17, 27, 37, 47, 58) being positioned under the action of the spring (19, 29, 38, 48) between a position in which it opens the passage or passages between the chambers containing each body and each colouring agent associated with this specified temperature and a position in which it closes this passage or passages.

4. An indicating device according to Claim 3, characterized in that a fragile capsule (18, 28) containing a colouring agent is placed inside a chamber containing the body associated with a specified temperature, this capsule being suitable to be brocken by the device of piston type when this temperature is reached.

5. An indicating device according to any of Claims 1 to 4, characterized in that in the case where a specified temperature that it is required to indicate is greater than the storage temperature ($T_1$) of the product, the body associated with this specified temperature has a melting point approximately equal to that specified and the martensitic type transformation of the associated alloy with shape memory (9) takes place with hysteresis.

6. An indicating device according to any of Claims 3 to 5, characterized in that in the case where two or more specified temperatures are included between the limiting temperatures ($\theta_1$, $\theta_2$) of the martensitic type transformation of an alloy having shape memory, the transformation temperature ($\theta_1$) of that alloy being approximately equal to the highest specified temperature, the different deformations of the spring at the different specified temperatures are used to release each colouring agent corresponding to each specified temperature.

7. An indicating device according to any of Claims 3 to 6, characterized in that in the case where a specified threshold temperature is greater than the storage temperature of the product, and is reached by the latter whilst merely passing from the manufacturing temperature to the storage temperature, means of self-setting (41, 51, 56, 57) are provided to cause the indicating device (32, 42, 60) to operate when this specified threshold temperature is reached during the passage from the manufacturing temperature to the storage temperature.

8. An indicating device according to Claim 7, characterized in that, in order to bring about the self-setting of the indicating device at a specified temperature, blocking means (41, 51, 56, 57) capable of being neutralized block the passage (39, 49) between the chambers containing the body and the colouring agent or agents associated with this specified temperature, piston means (37, 47, 48) associated with a spring in a shape memory alloy the transformation temperature of which is approximately equal to that specified being suitable to neutralize the blocking means (41, 51, 56, 57) when the temperature reaches the specified temperature, to block this passage between the chambers when the temperature becomes less than that specified and to free it when the temperature becomes greater than that specified.

9. An indicating device according to Claim 8, characterized in that the blocking means capable of being neutralized are formed by a plug that is capable of being ejected (41, 51, 56, 57) or by a film that is capable of being perforated by the associated piston (37, 47, 58).

10. A device according to any one of Claims 3 to 9, characterized in that in the case where the temperature interval between two specified temperatures is greater than the interval between the transformation temperatures ($\theta_1$, $\theta_2$) of the shape memory alloy of the associated spring, the temperature of which at the beginning of transformation ($\theta_1$) is equal to the higher specified temperature, at least one other spring in a second shape memory alloy the interval of transformation temperature ($\theta_1$, $\theta_2$) of which is complementary to that of the first alloy is associated therewith.

11. An indicating device according to any of Claims 3 to 10, characterized in that the shape memory alloys used to form the springs (38, 48) do not exhibit hysteresis in their martensitic transformations.

12. An indicating device according to any of the preceding Claims, characterized in that the colouration indicating that a specified temperature has been reached may be obtained by passage of a coloured liquid or of small coloured balls from one chamber to another, or by mixing a body that is liquid at this temperature with a colouring agent that is liquid or powdered or the like.

13. An indicating device according to any of Claims 3 to 10, characterized in that the shape memory alloys used to form each spring (68) exhibit hysteresis in their martensitic transformations.

## Patentansprüche

1. Anzeigevorrichtung zur Überwachung vorbestimmter Temperaturen, bei der das Über- oder Unterschreiten einer vorbestimmten Temperatur eine irreversible Verfärbung bewirkt, die durch Mischen eines bei dieser Temperatur flüssigen Körpers mit wenigstens einem Farbstoff zustande kommt, mit einer zumindest teilweise transparenten Dose, die die Visualisierung jeder einer vorbestimmten Temperatur entsprechenden Verfärbung ermöglicht, dadurch gekennzeichnet, daß der flüssige Körper und jeder Farbstoff jeweils in einer getrennten Kammer (4, 5, 6) im Innern der Dose (3) angeordnet sind, daß diese Kammern über wenigstens einen Durchgang (8, 9) miteinander verbunden sind, dem ein Verschlußglied (9, 10) zugeordnet ist, das aus einer doppeltwirkenden Legierung mit Formgedächtnis, d. h. zu reversiblen Verformungen befähigten Legierung besteht, deren Umwandlungstemperatur annähernd der zu visualisierenden vorbestimmten Temperatur entspricht, und daß das Verschlußglied (9, 10) in Abhängigkeit von seine Position die Kammern (4, 5 ; 5, 6) entweder miteinander verbindet oder voneinander trennt.

2. Anzeigevorrichtung nach Anspruch 1, dadurch gekennzeichnet, daß zur Überwachung mehrerer vorbestimmter Temperaturen jedem der einer vorbestimmten Temperatur zugeordneten Körper ein und derselbe Farbstoff zugeordnet ist und daß eine jedem Körper zugeordnete Legierung den jeweiligen Durchgang (7, 8) zwischen der betreffenden Kammer (4, 6), die diesen Körper enthält, und der Kammer (5), die den Farbstoff enthält, verschließt.

3. Anzeigevorrichtung zur Überwachung vorbestimmter Temperaturen, bei der das Über- oder Unterschreiten einer vorbestimmten Temperatur eine irreversible Verfärbung bewirkt, die durch Mischen eines bei dieser Temperatur flüssigen Körpers mit wenigstens einem Farbstoff zustande kommt, dadurch gekennzeichnet, daß jeder einer vorbestimmten Temperatur zugeordnete flüssige Körper, der bei dieser Temperatur flüssig ist, und jeder diesem Körper und damit der vorbestimmten Temperatur zugeordnete Farbstoff jeweils in getrennten Kammern (14, 15 ; 16, 17 ; 24, 25 ; 26, 28 ; 36, 35 ; 42, 52 ; 44, 53 ; 46, 45) angeordnet sind, die im Innern der Dose (13 ; 23 ; 33 ; 43) ausgebildet sind, daß diese Kammern untereinander jeweils über wenigstens einen Durchgang miteinander verbunden und durch wenigstens jeweils eine Kolbenanordnung (17, 27, 37, 47, 58) voneinander getrennt sind, die durch wenigstens eine aus einer doppeltwirkenden Legierung mit Formgedächtnis, d. h. einer reversibel verformbaren Feder, antreibbar ist, deren Umwandlungstemperatur annähernd jeweils der vorbestimmten Temperatur entspricht, und daß die Kolbenanordnung (17, 27, 37, 47, 58) durch die Feder (19, 29, 38, 48) zwischen einer Position, in der sie den (oder die) Durchgang (Durchgänge) zwischen den Kammern freigibt, die die einzelnen dieser vorbestimmten Temperatur zugeordneten Körper und Farbstoffe enthalten, und einer Position änderbar ist, in der sie den (oder die) Durchgang (Durchgänge) verschließt.

4. Anzeigevorrichtung nach Anspruch 3, dadurch gekennzeichnet, daß eine einen Farbstoff enthaltende zerbrechliche Kapsel (18, 28) im Innern einer Kammer angeordnet ist, die den einer vorbestimmten Temperatur zugeordneten Körper enthält, und daß diese Kapsel von der Kolbenanordnung zerbrochen werden kann, wenn diese Temperatur erreicht wird.

5. Anzeigevorrichtung nach einem der Ansprüche 1 bis 4, dadurch gekennzeichnet, daß für den Fall, daß eine vorbestimmte Temperatur, die angezeigt werden soll, über der Lagerungstemperatur ($T_1$) des Produkts liegt, der dieser vorbestimmten Temperatur zugeordnete Körper eine Schmelztemperatur hat, die annähernd mit der vorbestimmten Temperatur übereinstimmt, und daß die martensitisch Umwandlung der zugeordneten Legierung (9) mit Formgedächtnis mit Hysterese stattfindet.

6. Anzeigevorrichtung nach einem der Ansprüche 3 bis 5, dadurch gekennzeichnet, daß für den Fall, daß zwei oder mehr vorbestimmte Temperaturen innerhalb der Temperaturschwellwerte ($\theta_1$, $\theta_2$) der martensitischen Umwandlung einer Legierung mit Formgedächtnis liegen, die Umwandlungstemperatur ($\theta_1$) dieser Legierung annähernd der höheren der vorbestimmten Temperaturen entspricht, und daß die verschiedenen Verformungen der Feder bei den verschiedenen vorbestimmten Temperaturen zur Auslösung der einzelnen Verfärbungen verwendet werden, die jeweils den vorbestimmten Temperaturen entsprechen.

7. Anzeigevorrichtung nach einem der Ansprüche 3 bis 6, dadurch gekennzeichnet, daß für den Fall, daß ein vorbestimmter Temperaturschwellwert über der Lagerungstemperatur des Produkts liegt und von dem Produkt bei dem einfachen Übergang von der Herstellungstemperatur zur Lagerungstemperatur erreicht wird, Mittel (41, 51, 56, 57) zur Selbstentsicherung vorgesehen sind, die das Wirksamwerden der Anzeigevorrichtung (32, 42, 69) bewirken, wenn dieser vorbestimmte Temperaturschwellwert beim Übergang von der Herstellungstemperatur zur Lagerungstemperatur erreicht wird.

8. Anzeigevorrichtung nach Anspruch 7, dadurch gekennzeichnet, daß zur Realisierung der Selbstentsicherung der Anzeigevorrichtung bei einer vorbestimmten Temperatur neutralisierbare Verschlußmittel (41, 51, 56, 57) den Durchgang (39, 49) zwischen den Kammern verschließen, die den Körper und den (oder die) Farbstoff(e) enthalten, die dieser vorbestimmten Temperatur zugeordnet sind, daß eine Kolbenanordnung (37, 47, 48) vorgesehen ist, die einer Feder aus einer Legierung mit Formgedächtnis zugeordnet ist, deren Umwandlungstemperatur annähernd mit der vorbestimmten Temperatur übereinstimmt, wobei diese Kolbenanordnung die Verschlußmittel (41, 51, 56, 57) neutralisieren kann, wenn die Temperatur den Wert der vorbestimmten Temperatur erreicht, und diesen Durchgang zwischen diesen Kammern verschließen kann, wenn die Temperatur unter die vorbestimmte Temperatur absinkt, und den Durchgang wieder freigibt, wenn die Temperatur die vorbestimmte von neuem übersteigt.

9. Anzeigevorrichtung nach Anspruch 8, dadurch gekennzeichnet, daß die neutralisierbaren Verschlußmittel aus einem auswerfbaren Pfropfen (41, 51, 56, 57) oder aus einem Film bestehen, der von dem zugeordneten Kolben (37, 47, 58) perforierbar ist.

10. Anzeigevorrichtung nach einem der Ansprüche 3 bis 9, dadurch gekennzeichnet, daß für den Fall, daß das Intervall zwischen zwei vorbestimmten Temperaturen größer ist als das Intervall zwischen den Umwandlungstemperaturen ($\theta_1$, $\theta_2$) der die zugeordnete Feder bildenden Legierung mit Formgedächtnis, deren Temperatur ($\theta_1$) für den Beginn der Umwandlung mit der höheren der vorbestimmten Temperaturen übereinstimmt, und daß der aus der ersten Legierung gebildeten Feder wenigstens eine weitere Feder aus zweiten Legierung mit Formgedächtnis zugeordnet ist, bei der das Intervall Intervall zwischen den Umwandlungstemperaturen ($\theta_1$, $\theta_2$) zu demjenigen der ersten Legierung komplementär ist.

11. Anzeigevorrichtung nach einem der Ansprüche 3 bis 10, dadurch gekennzeichnet, daß die Legierungen mit Formgedächtnis, aus denen die Federn (38, 48) gebildet sind, bei der martensitischen Umwandlung keine Hysterese zeigen.

12. Anzeigevorrichtung nach einem der vorhergehenden Ansprüche, dadurch gekennzeichnet, daß die das Erreichen einer vorbestimmten Temperatur anzeigende Verfärbung durch Übergang einer gefärbten Flüssigkeit oder von gefärbten Kugeln aus einer Kammer in eine andere Kammer, durch Mischen eines bei dieser flüssigen Körpers mit einem flüssigen oder pulverförmigen oder anderersartigen Farbstoff erhalten wird.

13. Anzeigevorrichtung nach einem der Ansprüche 3 bis 10, dadurch gekennzeichnet, daß die Legierungen mit Formgedächtnis zur Ausbildung der einzelnen Federn (68) bei ihrer martensitischen Umwandlung Hysterese zeigen.

14

FIG.1

FIG.2

1

FIG. 3

FIG. 4

FIG. 5

FIG. 6

FIG.7

FIG.8

FIG.9

FIG.10

FIG.11

FIG.12

FIG.13

FIG.14

FIG.15

4

# FIG_16

# FIG_17